# EUROPEAN PATENT APPLICATION

(11) **EP 1 657 178 A1**
(43) Date of publication of application: **17.05.2006**
(21) Application number: 04771508.1
(22) Date of filing: 04.08.2004
(51) Int. Cl.: B65D 63/10, B29C 59/04

(54) **THERMOPLASTIC SYNTHETIC RESIN BAND AND METHOD FOR PRODUCING THE SAME**

(30) Priority: 08.08.2003 JP 2003290721
(71) Applicant: Sekisui Jushi Kabushiki Kaisha, Osaka-shi, Osaka 530-0047 (JP)
(72) Inventor: TAJIKA, Satoru Sekisui Jushi K.K., Osaka-shi Osaka 5300047 (JP); YAMANE, Susumu Sekisui Jushi K.K., Osaka-shi Osaka 5300047 (JP); MARUTANI, Tetsuya Sekisui Jushi K.K., Osaka-shi Osaka 5300047 (JP)
(74) Representative: Harland, Linda Jane
(86) International application number: PCT/JP2004/011523
(87) International publication number: WO 2005/014420

(57) **Abstract**

A method for manufacturing a thermoplastic synthetic resin band 1 according to the present invention includes passing a thermoplastic synthetic resin base material 10 between a pair of embossing rolls 2, on whose outer surface parallel concave grooves 2a of a constant width, which cross each other obliquely, and a plurality of rhombus-shaped convex portions 2b, which are partitioned with a constant surface area by the parallel concave grooves 2a, are formed, and forming, on a front and a back side of the thermoplastic synthetic resin base material 10, a plurality of parallel convex stripes 1a of a constant width, which cross each other obliquely, and a plurality of rhombus-shaped concave grooves 1b, partitioned with a constant surface area by the parallel convex stripes 1a. Embossing rolls 2 are used, wherein only an intersection angle in circumferential direction of the concave grooves 2a is set to 15 to 30°, without changing the width of the concave grooves 2a or the surface area of rhombus-shaped convex portions 2b. With this manufacturing method, a thermoplastic synthetic resin band 1 can be achieved, wherein the intersection angle in longitudinal direction of the convex stripes 1a is set to 15 to 30°.

## Description

### TECHNICAL FIELD

The present invention relates to thermoplastic synthetic resin bands and methods for manufacturing the same.

### BACKGROUND OF THE INVENTION

Generally, thermoplastic synthetic resin bands used for packaging or the like are produced by molding a raw sheet by extruding polypropylene resin, stretching it by 6 to 16 times, performing an embossing process and forming a plurality of parallel convex stripes, crossing each other obliquely, on the front and back side of the resin base material.

Conventionally, to manufacture such polypropylene resin bands, the resin base material, which has been stretched by 6 to 16 times, is passed through embossing rolls at a speed of 100 m/min or more. The embossing rolls are provided with concave grooves for forming the convex stripes, which are formed by resin flowing through the concave grooves. However, since the resin base material is passed through the embossing rolls at high speed, when the individual partitions that are partitioned by the concave grooves are large, the resin can hardly flow completely inside the concave grooves and convex stripes may not be formed in the molded bands. In such a case, it is conceivable that the resin material can be firmly sandwiched between the embossing rolls by decelerating the passing speed through the embossing rolls, or that the flow of resin inside the concave grooves can be improved by heating up the embossing rolls to a temperature equal to the resin material, but that would decrease the production efficiency, raise the production costs and the lateral orientation applied to the resin base material itself would increase too much and the physical properties would decrease. Therefore, the embossing roll is set such that the surface area of each partition formed by the concave grooves becomes 2.4 mm² ± 25% when the width of the band is 15.5 mm, and 0.9 mm² ± 25% when the width of the band is 5 mm.

The parallel convex stripes formed by the embossing process are provided so as to suppress ruffle on the surface layer that become fibrous by stretching, to prevent longitudinal cracks by disordering the orientation, which was caused by the stretching, in the lateral direction, to strengthen the resilience by increasing the apparent thickness, and to increase the travel ability inside the arch of packing machines, for example.

The intersection angle in the longitudinal direction of the parallel convex stripes provided by the embossing process in conventional thermoplastic synthetic resin bands is 35 to 50°.

Incidentally on the market there is a demand for bands of small unit weight, in view of the environmental concerns of the recent years, in order to save resources and reduce costs.

However, in conventional methods for manufacturing thermoplastic synthetic resin bands as described above, when the band is formed while simply lowering the unit weight of the thermoplastic synthetic resin base material, the resin cannot flow sufficiently into the parts of the concave grooves of the embossing rolls and the parts of the parallel convex stripes of the formed thermoplastic synthetic resin band will not be fully formed. As a result, the resilience decreases and malfunctions may occur regarding the traveling inside the arch of packing machines. Therefore it would seem that a suitable thickness for packing machines (at least 0.58 mm) can be provided by reducing the surface area of the individual partitions formed by the concave grooves of the embossing rolls and thus provide a better flow of the resin in the parts of the concave groove. However, in such a case the proportion of parallel convex stripes in the thermoplastic synthetic resin bands increases and it becomes impossible to reduce the unit weight, while the thickness of the base material portion of the center becomes thin, the tensile strength decreases and the intended function may be compromised.

The present invention has been devised in consideration of these circumstances and it is an object thereof to provide a thermoplastic synthetic resin band with excellent resilience, tensile strength and suitability for packing machines, or a thermoplastic synthetic resin band to be possible to reduce the unit weight, and a method for manufacturing such a thermoplastic synthetic resin band.

### DISCLOSURE OF THE INVENTION

To solve the above-described problems, a thermoplastic synthetic resin band according to the present invention is made by forming, on a front and a back side of a thermoplastic synthetic resin base material, a plurality of parallel convex stripes of a constant width, which cross each other obliquely, and a plurality of rhombus-shaped concave portions, partitioned with a constant surface area by the parallel convex stripes, wherein an intersection angle in longitudinal direction of the convex stripes is 15 to 30°. The width of the thermoplastic synthetic resin band may be 12 to 19 mm and its center portion thickness may be 20 to 30% with respect to its apparent thickness. Furthermore, the width of the thermoplastic synthetic resin band may be 5 to 9 mm and its center portion thickness may be 20 to 32% with respect to its apparent thickness.

Furthermore, to solve the above-described problems, a method for manufacturing a thermoplastic synthetic resin band according to the present invention includes: passing a thermoplastic synthetic resin base material between a pair of embossing rolls, on whose outer surface parallel concave grooves of a constant width, which cross each other obliquely, and a plurality of rhombus-shaped convex portions partitioned with a constant surface area by the parallel concave grooves are formed; and forming, on a front and a back side of the thermoplastic synthetic resin base material, a plurality of parallel convex stripes of a constant width, which cross each other obliquely, and a plurality of rhombus-shaped concave portions, partitioned with a constant surface area by the parallel convex stripes; wherein embossing rolls are used, wherein only an intersection angle in circumferential direction of the concave grooves is set to 15 to 30°, without changing the width of the concave grooves or the surface area of rhombus-shaped convex portions, which are partitioned by the concave grooves. In this manufacturing method, a thermoplastic synthetic resin band with a width of 12 to 19 mm may be manufactured using a thermoplastic synthetic resin base material whose unit weight is reduced such that its center portion thickness becomes 20 to 30% with respect to its apparent thickness. Furthermore, in this manufacturing method, a thermoplastic synthetic resin band with a width of 5 to 9 mm may be manufactured using a thermoplastic synthetic resin base material whose unit weight is reduced such that its center portion thickness becomes 20 to 32% with respect to the apparent thickness.

In accordance with the present invention, thermoplastic synthetic resin bands with a high resilience and tensile strength are generated by setting the intersection angle of the longitudinal direction of the parallel convex stripes to 15 to 30°. Moreover, by setting a predetermined ratio of the center portion thickness with respect to the apparent thickness, it is possible to reduce the manufacturing costs by decreasing the unit weight while maintaining the performance of the band. Also, by reducing the unit weight, the weight of the band itself is reduced, so that also a reduction of the transportation costs can be achieved.

### BRIEF DESCRIPTION OF THE DRAWINGS

FIG. 1 is a plan view showing one example of an embodiment of a thermoplastic synthetic resin band according to the present invention.
FIG. 2 is an enlarged view of the important part of FIG. 1.
FIG. 3 is a cross-sectional view illustrating the process of forming convex stripes on the front and back side of the band base material.
FIG. 4 is a cross·sectional view showing parts where the thickness has decreased and parts where the thickness has increased from the raw sheet.
FIG. 5 is a diagram illustrating a method for evaluating the resilience.
FIG. 6(a) is a graph showing the relationship between the resilience in Working Example 1 and the ratio between the center portion thickness d and the apparent thickness D, and FIG. 6(b) is a graph showing the relationship between the tensile strength in Working Example 1 and the ratio between the center portion thickness d and the apparent thickness D.
FIG. 7(a) is a graph showing the relationship between the resilience in Working Example 2 and the ratio between the center portion thickness d and the apparent thickness D, and FIG. 7(b) is a graph showing the relationship between the tensile strength in Working Example 2 and the ratio between the center portion thickness d and the apparent thickness D.

### BEST MODE FOR CARRYING OUT THE INVENTION

The following is a detailed explanation of embodiments according to the present invention with reference to the drawings.

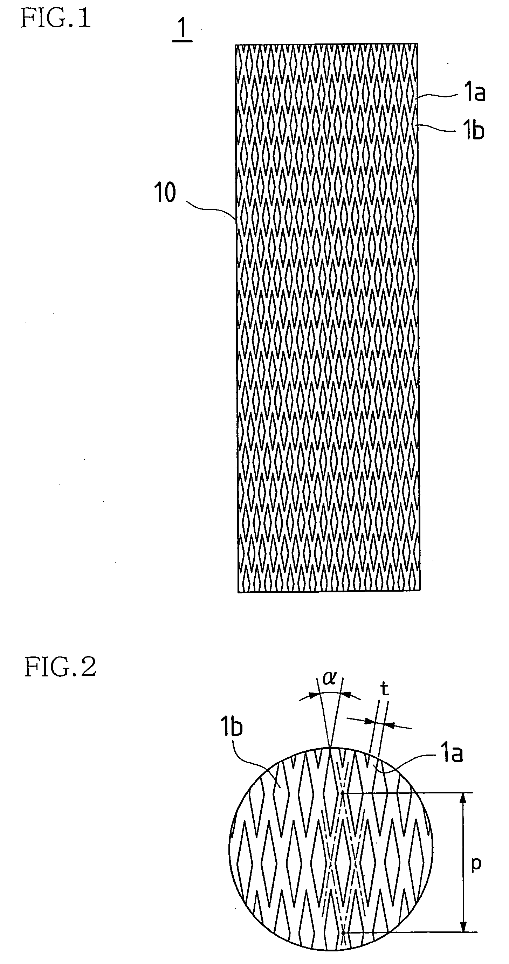

FIG. 1 is a plan view showing one example of an embodiment of a thermoplastic synthetic resin band for packaging according to the present invention (hereinafter simply referred to as "band"), and FIG. 2 is an enlarged view of the important part of FIG. 1. In a band 1, on the front and back-side of a base material 10 of thermoplastic synthetic resin (hereinafter simply referred to as "base material"), a plurality of parallel convex stripes 1a crossing each other obliquely is formed. The concave portions 1b, which are partitioned by being enclosed by the parallel convex stripes 1a, each have the shape of a rhombus with a predetermined surface area. As shown in FIG. 2, α indicates the intersection angle along the longitudinal direction of the convex stripes 1a, t indicates the width (rib width) of the convex stripes 1a, and p indicates the pitch (the distance with respect to the longitudinal direction of the distances between the intersection points where the center lines bisecting the width of the convex stripes intersect). The present embodiment provides a band 1 with a strong resilience and good suitability for packing machines, even in the event that the width t of the convex stripes 1a and the surface area of the concave portion 1b are identical, by setting the intersection angle α to 15 to 30° .

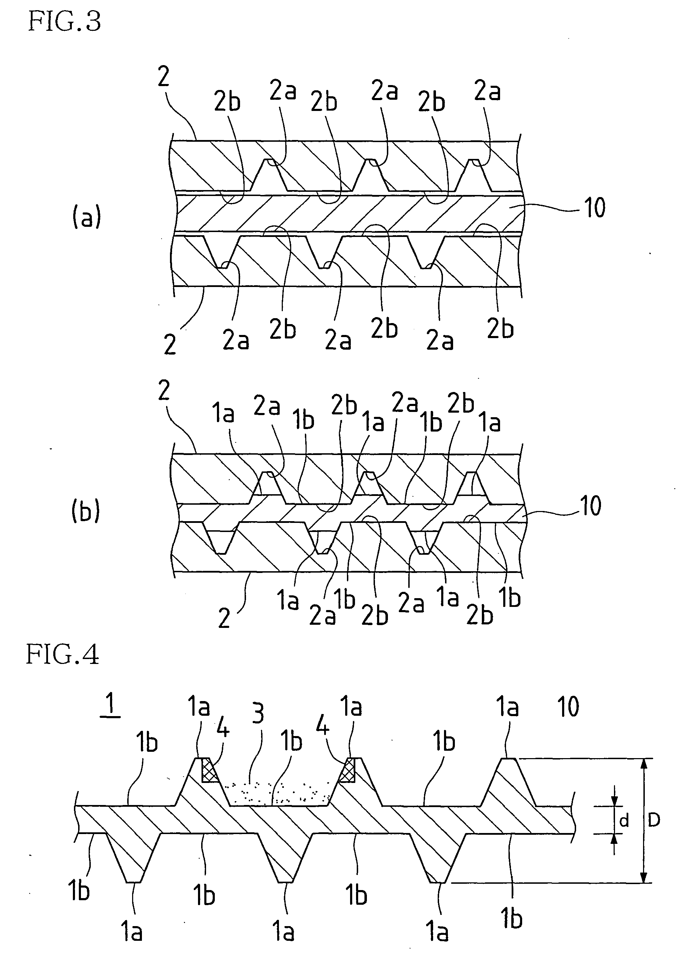

The formation process of the convex stripes 1a on the front and back side of the band 1 will be explained with reference to FIG. 3.

In the drawings, 10 denotes the base material. According to the present embodiment, for the base material 10, a material is used that is extruded into a flat band shape and then stretched by 6 to 16 times so as to impart an improved strength. Polypropylene resin can be named as an example for the raw material of the thermoplastic synthetic resin.

The base material 10 is stretched first, and then passed between embossing rolls 2 to form the band 1. Accordingly, the base material 10 can be chosen depending on the size of the band 1 that is formed. For example, when a band 1 of 5 mm width and 0.45 mm thickness is formed, a material having a unit weight of a least 1.3 g/m is ordinarily used for the thermoplastic synthetic resin base material 10; when a band 1 of 12.0 mm width and 0.63 mm thickness is formed, a material having a unit weight of at least 3.3 g/m is ordinarily used for the base material 10; when a band 1 of 15.5 mm width and 0.63 mm thickness is formed, a material having a unit weight of at least 4.3 g/m is ordinarily used for the base material 10; and when a band 1 of 19.0 mm width and 0.63 mm thickness is formed, a material having a unit weight of at least 5.3 g/m is ordinarily used for the base material 10. According to the present embodiment, by setting the intersection angle to 15 to 30°, when the band 1 has a width of 5 mm and thickness of 0.45 mm, a unit weight of less than 1.25 g/m can be achieved; when the band 1 has a width of 12 mm and a thickness of 0.63 mm, a unit weight of less than 3.2 g/m can be achieved; when the band 1 has a width of 15.5 mm and a thickness of 0.63 mm, a unit weight of less than 4.3 g/m can be achieved; and when the band 1 has a width of 19 mm and a thickness of 0.63 mm, then a unit weight of less than 5.2 g/m can be achieved.

The embossing rolls that are used are provided with concave grooves 2a at the portions corresponding to the convex stripes 1a formed in the surface of the band 1 and convex portions 2b at the portions corresponding to the rhombus-shaped concave portions 1b. The passage speed of the base material 10 that is passed between the embossing rolls 2 is adjusted in a range of 150 to 250 m/min, depending on the band 1 that is produced. The gap between the embossing rolls 2 is also adjusted depending on the band that is produced.

When the base material 10 passes between the embossing rolls 2, the convex stripes 1a are elevated in the portions corresponding to the concave grooves 2a of the embossing rolls 2 and at the same time the rhombus-shaped concave portions 1b are formed in the portions corresponding to the convex portions 2b of the embossing rolls 2. In FIG. 4, 1b denotes rhombus-shaped concave portions formed in the band 1; 3 denotes portions whose thickness is decreased from the raw sheet of the base material 10; and 4 denotes portions whose thickness is increased from the raw sheet of the base material 10. Moreover, D denotes the apparent thickness of the band 1, and d denotes the center portion thickness obtained by subtracting the height of the convex stripes 1a from the apparent thickness D.

The length over which the embossing rolls 2 and the base material 10 are in contact is about 12 mm and the molding is performed within the extremely short molding time of 0.003 to 0.005 seconds, given the above-noted passage speed. Thus, the resin cannot flow sufficiently into the concave grooves 2a when the convex portions 2b of the embossing rolls 2 have a large surface area, so that the elevation of the convex stripes 1a of the band 1 becomes insufficient. Moreover, too much resin flows into the grooves 2a when the convex portions 2b of the embossing rolls 2 have a small surface area, so that the center portion thickness d of the band 1 becomes too thin, while the orientation disorder increases and the tensile strength cannot be secured. Therefore the surface area of the convex portions 2b of the embossing rolls 2 is adjusted to the band 1 that is produced. For example, the surface area of the convex portions 2b of the embossing rolls 2 is set to 2.4 mm² ± 25% when the width of the band 1 is 12.0 mm, 15.5 mm or 19.0 mm, and to 0.9 mm² ± 25% when the width of the band 1 is 5.0 mm or 6.0 mm.

In the present embodiment, a sufficient amount of resin flows into the concave grooves 2a, because only the intersection angle α along the circumferential direction of the concave grooves 2a is appropriately changed to a sharper angle with a range of 15 to 30° than conventionally (at least 35° or more), without changing the width of the concave grooves 2a or the surface area of the convex portions 2b of the embossing rolls 2. As a result, the convex stripes 1a of the band 1 are formed firmly. Moreover, since the width t of the convex stripes 1a and the surface area of the concave portion 1b in the band 1 are identical, the number of convex stripes 1a increases with respect to the width and the resilience is strengthened due to the increased orientation along the longitudinal direction. When the intersection angle α of the convex stripes 1a is enlarged to more than 30°, the orientation along the longitudinal direction cannot be increased sufficiently and since the number of convex stripes 1a cannot be increased sufficiently with respect to the width, the band 1 cannot obtain the effect of strengthening the resilience sufficiently and thus the suitability for packing machines cannot be secured. Moreover, when the intersection angle α of the convex stripes 1a is reduced to less than 15°, the orientation along the longitudinal direction increases too much and thus the convex stripes 1a are formed too tight. At the same time, the center portion thickness d becomes too thin, the tensile strength decreases and the band 1 becomes susceptible to longitudinal cracks.

It is preferable to adjust the ratio of the center portion thickness d with respect to the apparent thickness D of the band 1 such that it is suitable for the case that the intersection angle α is set to 15 to 30° . If the width of the band 1 is 12 to 19 mm, the ratio of the center portion thickness d with respect to the apparent thickness D is adjusted to 20 to 30° . Furthermore, if the width of the band 1 is 5 to 9 mm, the ratio of the center portion thickness d with respect to the apparent thickness D is adjusted to 20 to 32° . This adjustment can be achieved by reducing the unit weight of the base material 10 that is used at the time of manufacturing. At this time, when the unit weight of the base material 10 is decreased too much, the center portion thickness d becomes too thin and the ratio falls below the lower limit, and a sufficient tensile strength cannot be secured. Moreover, when manufacturing without reducing the unit weight of the base material 10, a resilience and a tensile strength that are greater than the specification value can be achieved, but that would only mean over-specification and waste of the base material 10.

By manufacturing in this manner, the band 1 shows the same performance as conventionally, while the unit weight of the base material 10 can be reduced by up to 10% or more and thus a reduction of the production costs can be achieved. Moreover, since weight is saved by this reduction of the unit weight, a reduction of the transportation costs or the like can also be obtained.

The following is a more specific explanation of the present invention with reference to working examples.

### [Working Example 1]

The manufacturing conditions of the bands used in the following working example are:

| Raw material | Polypropylene (MI = 2) |
|---|---|
| Drawing ratio | 10 times |
| Band width | 15.5 mm |
| Band thickness | 0.63 mm (apparent thickness after the embossing process) |
| Unit weight | 3.8 to 4.4 g/m |
| Annealing shrinkage | 10% |
| Surface area of rhombus-shaped concave portion | 2.4 mm ² |
| Rib width | 0.4 mm |

Except for an intersection angle of the convex stripes of 35 to 38° and a unit weight of 3.8 to 4.4 g/m, all bands were produced according to the above-noted manufacturing producing conditions. The resilience, tensile strength, longitudinal cracks, and the suitability for packing machines of bands manufactured in this manner were evaluated and are shown in Tables 1 to 4. In those tables, (1) is the unit weight and (2) is the intersection angle of the convex stripes.

The evaluation standards are that the resilience is at least 29 mN per band width, that there is the possibility of reducing the unit weight of 4.3 g/m by 0.1 g or more, and that a tensile strength is at least 125 N / apparent cross sectional surface area (15.5 mm × 0.63 mm).

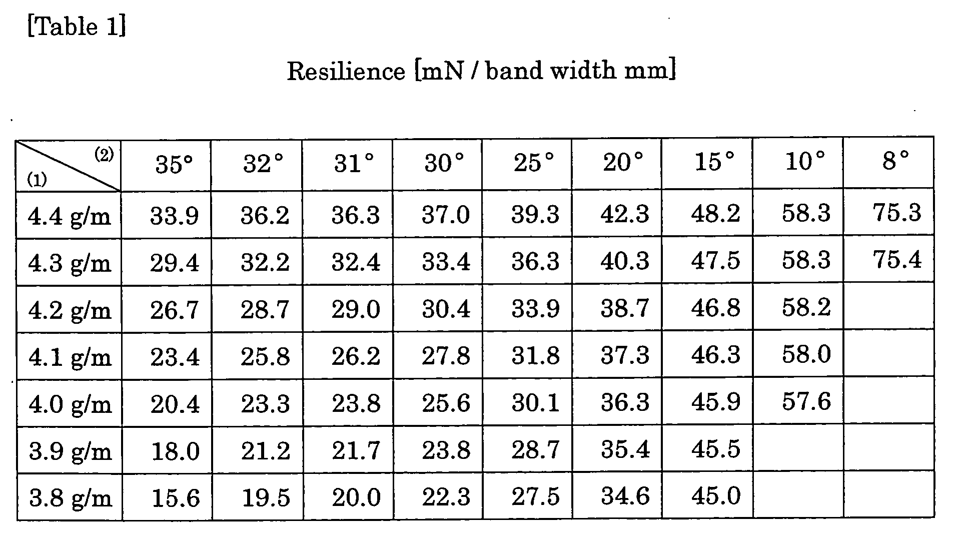

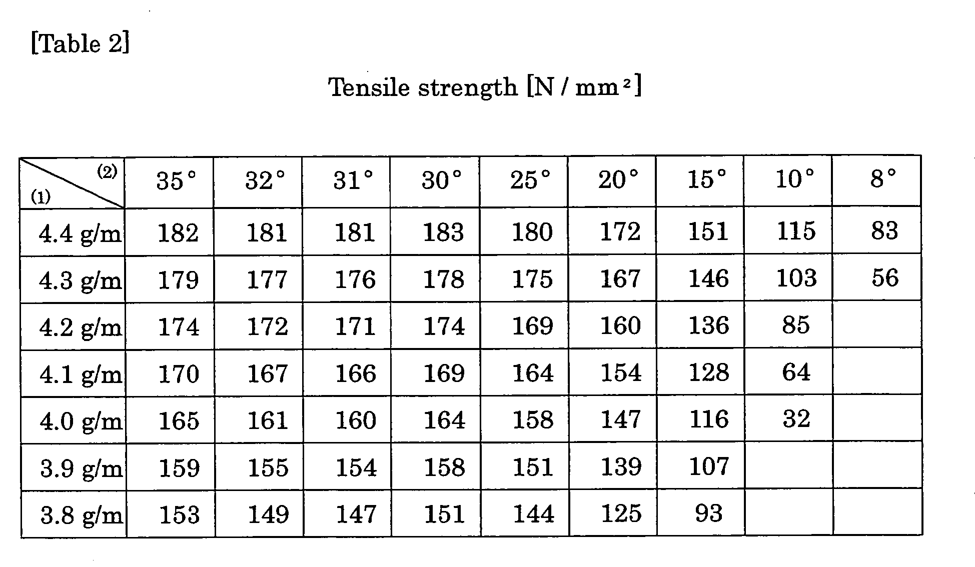

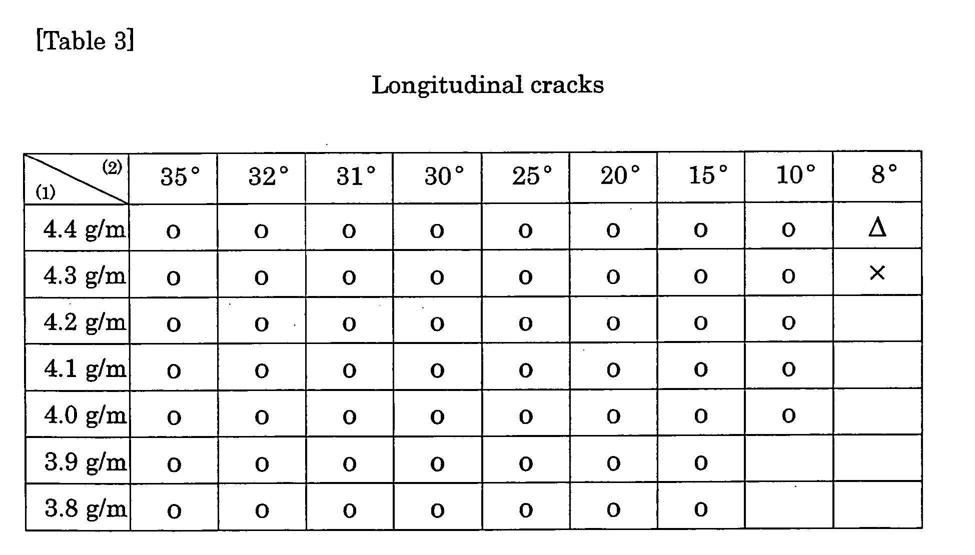

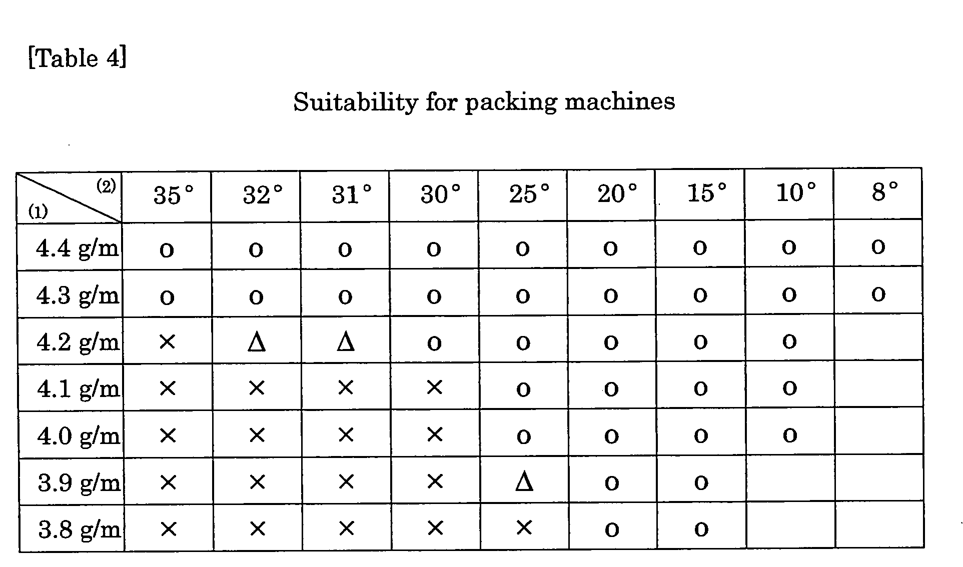

Hereinafter the evaluation methods for the above-listed Tables 1 to 4 will be explained.

### <Resilience>

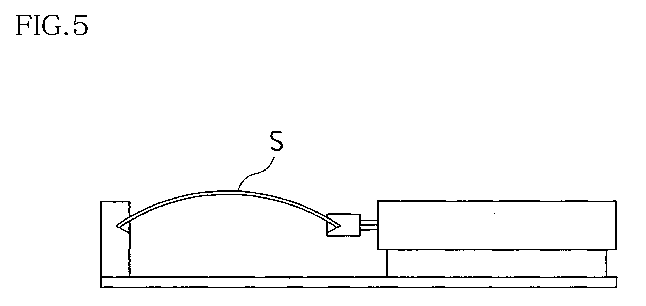

A sample S is pushed in the longitudinal direction, as shown in FIG. 5, and the repulsive force is measured.
Length of sample: 100 mm
Measuring instrument: DPRSX-0.25, made by Imada Co., Ltd.
Span: 80 mm
Measuring room temperature: 20° C

### <Tensile strength>

Measuring instrument: Production Autograph AG 2000E, made by Shimadzu Corp.
Measuring span: 200 mm
Tearing speed: 200 mm / min
Measuring room temperature: 20° C

### <Longitudinal cracks>

The center of a 100 mm long sample is picked up with pincers, the sample is folded in width direction and the sample is observed.
O No cracks occurred in the sample
Δ: Cracks occurred in the surface of the sample
×: Ruptures occurred in the sample

### <Suitability for packing machines>

Measured by the number of malfunctions of the arch feeder when bundling 1000 times with a Naigai F11 packing machine.
O: When bundling 1000 times, the number of malfunctions of the arch feeder is zero.
Δ: When bundling 1000 times, malfunctions of the arch feeder occur 1 to 3 times.
×: When bundling 1000 times, malfunctions of the arch feeder occur 4 or more times.

According to the results of Tables 1 to 4, it can be confirmed that bands that are suitable as products are manufactured when the intersection angle of the convex stripes is in a range of 15 to 30°, even when the unit weight is light. In particular, it could be confirmed that the unit weight can be reduced by up to at least 10% with an intersection angle of 20° .

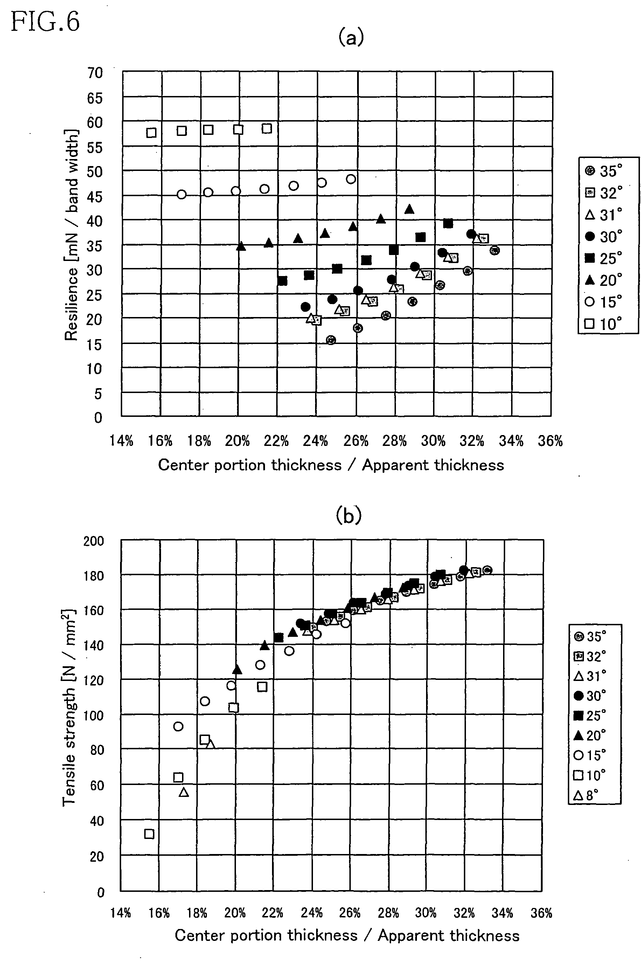

Moreover, the relationship between the achieved resilience and the tensile strength on the one hand and the ratio between the center portion thickness d and the apparent thickness D on the other hand is graphically represented in FIG. 6. As a result, it could be confirmed that a band can be manufactured that fulfills both of the evaluation standards of resilience and tensile strength, when the ratio of the center portion thickness d with respect to the apparent thickness D is 20 to 30%.

Although not shown in the figures, also bands that were molded exactly the same as in the above-noted Working Example 1, except that the band width was set to 12.0 mm and the unit weight was set to 2.8 to 3.4 g/m and bands that were molded exactly the same as in the above-noted Working Example 1, except that the band width was set to 19.0 mm and the unit weight was set to 4.8 to 5.4 g, were manufactured and confirmed exactly in the same manner.

As a result, it could be confirmed that for both types of bands, namely bands with a band width of 12.0 mm and bands with a band width of 19.0 mm, a band that is suitable as a product can be manufactured when the intersection angle of the convex stripes is in a range of 15 to 30°, even when the unit weight is light. In particular, it could be confirmed that the unit weight can be reduced by up to at least 10% with an intersection angle of 20°. Moreover, it could be confirmed that a band can be manufactured that fulfills both of the evaluation standards of resilience and tensile strength, when the ratio of the center portion thickness d with respect to the apparent thickness D is 20 to 30%.

### [Working Example 2]

The manufacturing conditions of the bands used in the following working example are:

| Raw material | Polypropylene (MI = 2) |
|---|---|
| Draw ratio | 7.5 times |
| Band width | 5.0 mm |
| Band thickness | 0.45 mm (apparent thickness after the embossing process) |
| Unit weight | 1.0 to 1.3 g/m |
| Annealing shrinkage | 10% |
| Rhombus-shaped concave portion surface area | 0.9 mm² |
| Rib width | 0.4 mm |

Except for an intersection angle of the convex stripes of 40 to 10° and a unit weight of 1.0 to 1.3 g/m, all bands were produced according to the above-noted producing conditions. The resilience, the tensile strength, longitudinal cracks, and the suitability for packing machines of bands manufactured in this manner are evaluated and shown in Tables 5 to 8. In these tables, (1) is the unit weight and (2) is the intersection angle of the convex stripes.

The evaluation standards are that the resilience is at least 25 mN per band width, that there is the possibility of reducing the unit weight from 1.3 g/m by 0.05 g or more, and that the tensile strength is at least 233N / mm².

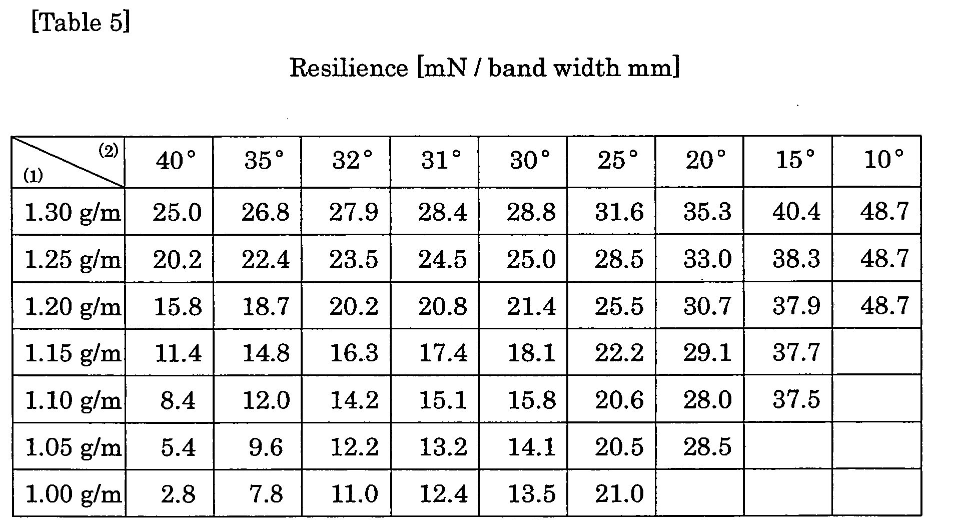

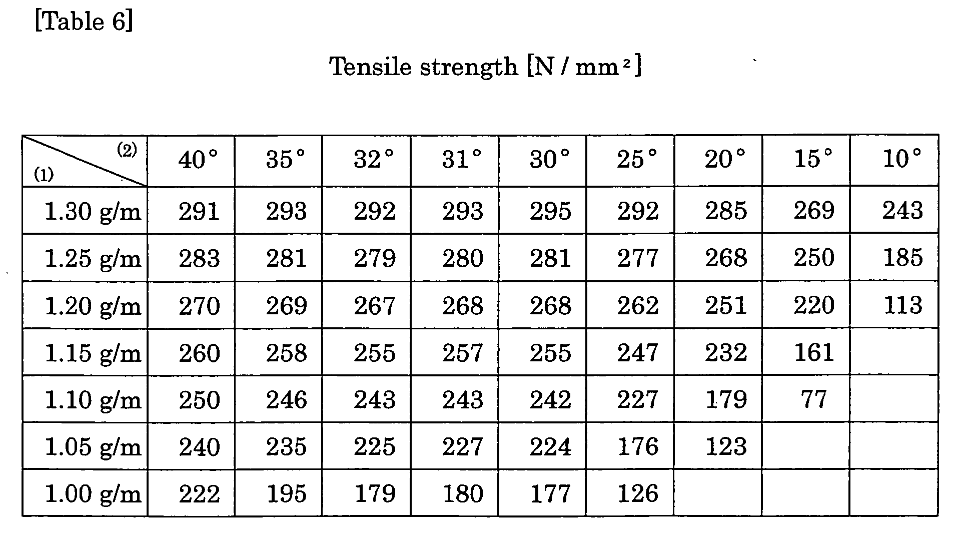

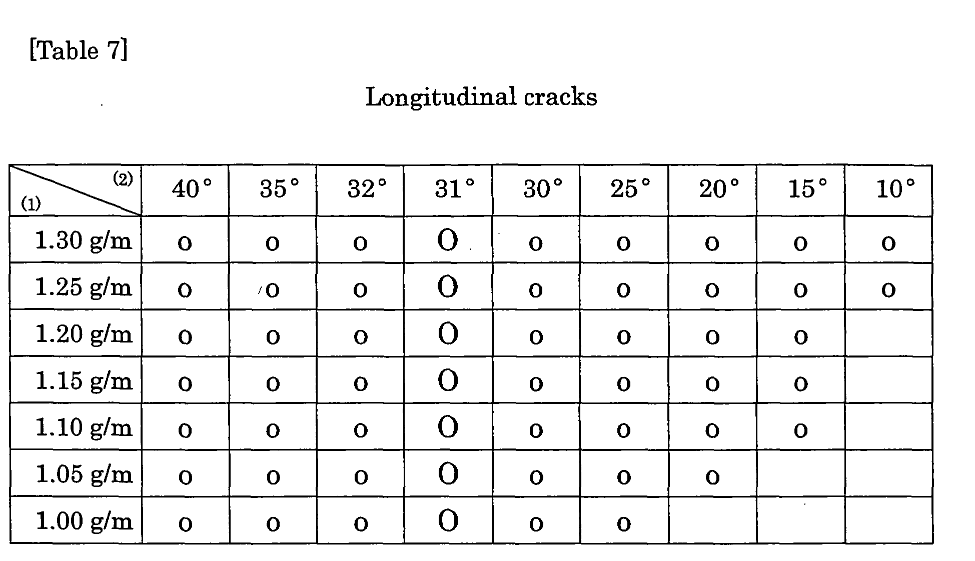

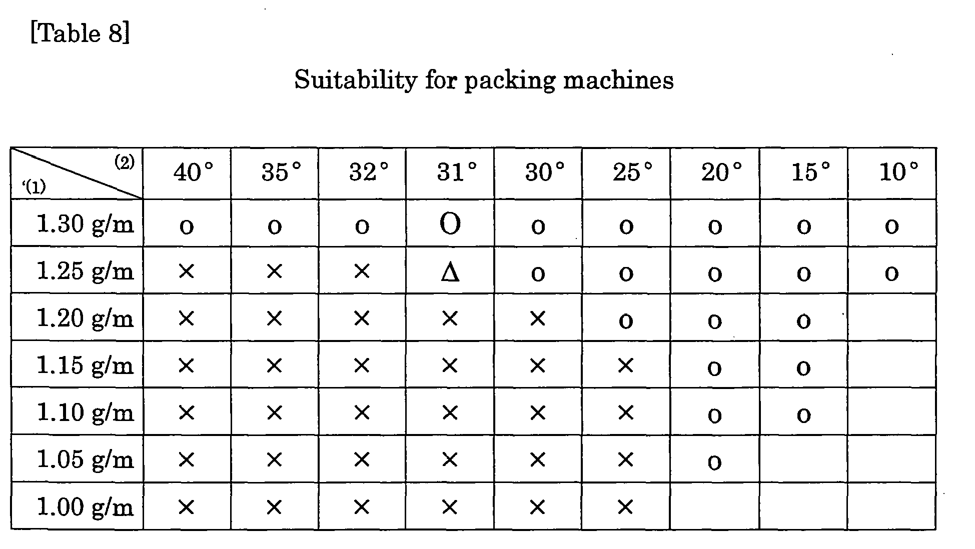

The evaluation for the above-listed Tables 5 to 8 is performed in accordance with that of Working Example 1.

According to the results of Tables 5 to 8, it could be confirmed that even if the unit weight is light, a band that is suitable for a product can be manufactured when the intersection angle of the convex stripes is set in a range of 15 to 30°. In particular, it could be confirmed that the unit weight can be reduced by up to at least 10% with any of the intersection angles in a range of 15 to 30°.

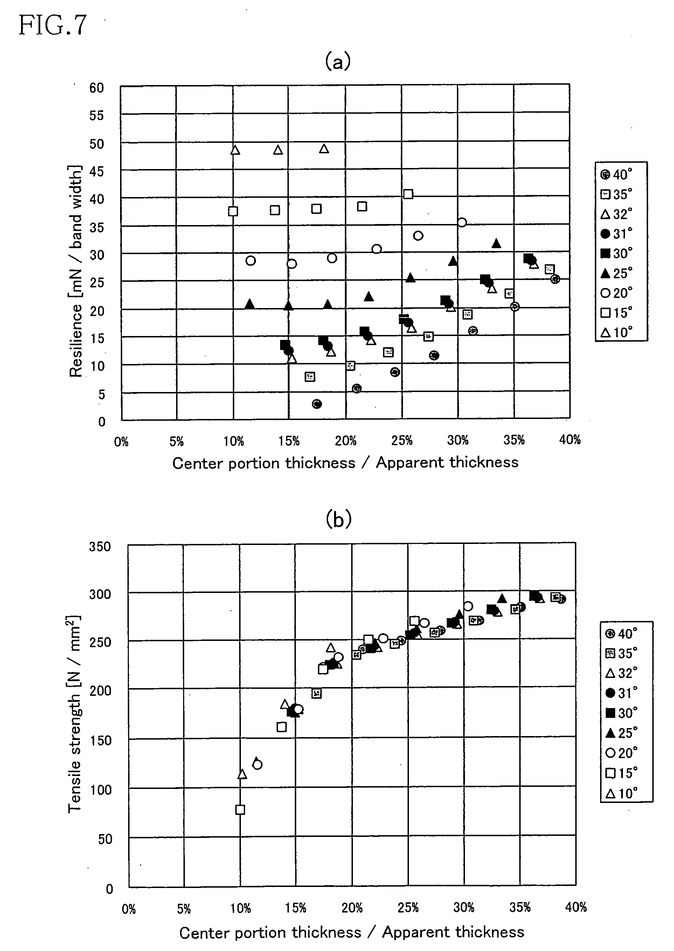

Moreover, the relationship between the achieved resilience and the tensile strength on the one hand and the ratio between the center portion thickness d and the apparent thickness D on the other hand is graphically represented in FIG. 7. As a result, it could be confirmed that a band can be manufactured that fulfills both of the evaluation standards of resilience and tensile strength when the ratio of the center portion thickness d with respect to the apparent thickness D is 20 to 32%.

Although not shown in the figures, also bands that were molded exactly in the same manner as described in Working Example 2, except that the band width was set to 9.0 mm and the unit weight was set to 2.5 to 2.8 g/m were produced and confirmed exactly in the same manner as described in Working Example 2.

As a result, it could be confirmed that also for bands with a band width of 9.0 mm, even if the unit weight is light, a band that is suitable for a product can be manufactured, when the intersection angle of the convex stripes is in a range of 15 to 30° . In particular, it could be confirmed that the unit weight can be reduced by up to at least 10% with any intersection angle in the range of 15 to 30° . Furthermore, it could be confirmed that a band is manufactured that fulfills both of the evaluation standards of resilience and tensile strength, when the ratio of the center portion thickness d with respect to the apparent thickness D is 20 to 32%.

### INDUSTRIAL APPLICABILITY

The present invention can be applied to thermoplastic synthetic resin bands used for packing.

## Claims

1. A thermoplastic synthetic resin band made by forming, on a front and a back side of a thermoplastic synthetic resin base material, a plurality of parallel convex stripes of a constant width, which cross each other obliquely, and a plurality of rhombus-shaped concave portions, which are partitioned with a constant surface area by the parallel convex stripes;
wherein an intersection angle in longitudinal direction of the convex stripes is 15 to 30°.

2. The thermoplastic synthetic resin band according to claim 1, whose width is 12 to 19 mm and whose center portion thickness is 20 to 30% with respect to its apparent thickness.

3. The thermoplastic synthetic resin band according to claim 1, whose width is 5 to 9 mm and whose center portion thickness is 20 to 32% with respect to its apparent thickness.

4. A method for manufacturing a thermoplastic synthetic resin band comprising:
passing a thermoplastic synthetic resin base material between a pair of embossing rolls, on whose outer surface parallel concave grooves of a constant width, which cross each other obliquely, and a plurality of rhombus-shaped convex portions, which are partitioned with a constant surface area by the parallel concave grooves, are formed; and
forming, on a front and a back side of the thermoplastic synthetic resin base material, a plurality of parallel convex stripes of a constant width, which cross each other obliquely, and a plurality of rhombus-shaped concave portions, which are partitioned with a constant surface area by the parallel convex stripes;
wherein embossing rolls are used, in which only an intersection angle in circumferential direction of the concave grooves is set to 15 to 30°, without changing the width of the concave grooves or the surface area of rhombus-shaped convex portions, which are partitioned by the concave grooves.

5. The method for manufacturing a thermoplastic synthetic resin band according to claim 4, wherein a thermoplastic synthetic resin band with a width of 12 to 19 mm is manufactured using a thermoplastic synthetic resin base material whose unit weight is reduced such that its center portion thickness becomes 20 to 30% with respect to its apparent thickness.

6. The method for manufacturing thermoplastic synthetic resin bands according to claim 4, wherein a thermoplastic synthetic resin band with a width of 5 to 9 mm is manufactured using a thermoplastic synthetic resin base material whose unit weight is reduced such that its center portion thickness becomes 20 to 32% with respect to the apparent thickness.
